## Europäisches Patentamt
## European Patent Office
## Office européen des brevets

(19)

(11) Publication number: **0 135 633**
**B1**

(12) # EUROPEAN PATENT SPECIFICATION

(45) Date of publication of patent specification: **30.12.86**

(51) Int. Cl.⁴: **G 09 B 23/18**

(21) Application number: **83305902.5**

(22) Date of filing: **29.09.83**

(54) **A combinative electronic circuit element with multidirectionally adjustable joints.**

(43) Date of publication of application:
**03.04.85 Bulletin 85/14**

(45) Publication of the grant of the patent:
**30.12.86 Bulletin 86/52**

(84) Designated Contracting States:
**AT BE CH DE FR GB IT LI NL SE**

(56) References cited:
**DE-A-1 547 502**
**DE-A-1 959 943**
**DE-A-2 049 119**

(73) Proprietor: **Lee, Lan-Ying**
**3rd Fl. No.163 Wan Sheng Street**
**Taipei (TW)**
(73) Proprietor: **Yang, Chi-Ming**
**3rd Fl., No. 5 Lane 29 Fu Hsing Road**
**Hsin Tien City Taipei Hsien (TW)**

(72) Inventor: **Weng. Teng-Ching**
**103 Hs in Feng Street**
**Chung 40 City Taipei Hsi en (TW)**
Inventor: **Yang, Chi-Ming**
**3rd Fl. No. 5 Lane 29 Fu Hsing Road**
**Hsin Tien City Taipei Hsien (TW)**

(74) Representative: **Lawson, David Glynne et al**
**MARKS & CLERK 57-60 Lincoln's Inn Fields**
**London WC2A 3LS (GB)**

EP 0 135 633 B1

## Description

The present invention relates to a combinative electronic circuit element composed of a cube-shaped block having an electronic component assembled therein. The block contains a pair of recesses formed in one pair of its outer opposite surfaces and a pair of projections on another pair of outer opposite surfaces, hence a total of four block-engaging surfaces or four joints. To the bottom surface of each recess and to the top surface of each projection is fixed a contact plate, which is then connected to said electronic component within said block so that upon engagement of a recess of one block with a projection of another block the two electronic components housed in the two blocks are in communication with each other. A plurality of blocks each containing a different electronic component can be put together according to a given electronic circuit diagram by bringing said recess and projection into union so as to form a complete electronic circuit. This invention provides, therefore, not only the ease with which said elements are combined, disassembled or rearranged but also the advantages of economy and practicality.

It is a common practice of the present day for technical schools or institutions that provide a practical course in electronic circuits to require students to solder electronic components on to printed circuit boards. As a purchase of different printed circuit boards and a full set of various electronic components must be made each time they are instructed to practice with a different circuit, students are heavily burdened with the cost incurred. Moreover, so time-consuming is the soldering of electronic components that the progress of teaching is delayed, and thus an immediate effect of learning can hardly be expected. Although there are plug-in electronic circuit kits available (e.g. DE—A—1547502), they are generally so high-priced that students can hardly afford them. Also a flexible use of plug-in electronic circuit kits is impossible because the layout of circuits and the number of electronic components are limited by the small area of the breadboard which can accommodate only a finite number of electronic components.

In the light of the foregoing disadvantages, the inventor has come out with a combinative electronic circuit element.

The primary object of the present invention is to provide a combinative electronic circuit element for the field of electronics training. With each element adapted to contain a different electronic component, a plurality of such elements can be combined together, without the need for soldering, to form a complete electronic circuit.

Another object of the present invention is to provide a cube-shaped combinative electronic circuit element with multidirectionally adjustable joints in the form of a recess or a projection, upon engagement of which elements are connected, and so are the electronic components contained therein.

Still another object of the present invention is to provide an economic, convenient and practical instrument for the field of electronics training.

A further object of the present invention is to provide an electronic kit that is informative, intellectualizing and yet entertaining.

These and other objects and features of the present invention will be better understood from the following description taken in connection with the accompanying drawings.

Figure 1 is a perspective view of the block according to the present invention;

Figure 2 is a top view of the block of Figure 1;

Figure 3 is a schematic exploded view of the block according to the present invention;

Figure 4 is a top view of the block of Figure 3;

Figure 5 is a cross sectional view of combined blocks according to the present invention;

Figure 6 shows an embodiment of the present invention;

Figure 7 shows another embodiment of the present invention;

Figure 8 depicts yet another embodiment of an electronic circuit element in accordance with the present invention; and

Figure 9 is a schematic view of combined blocks according to the present invention.

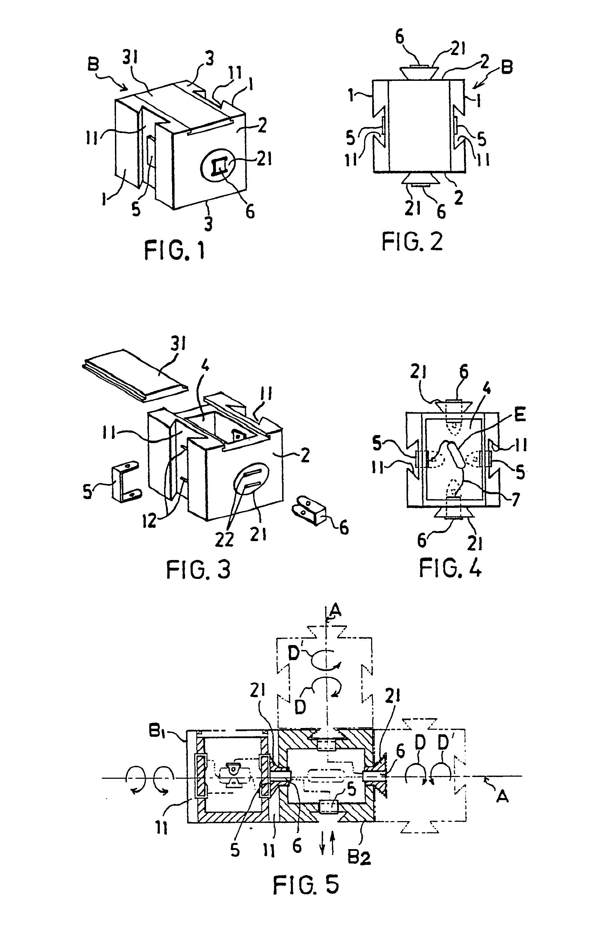

With reference now to Figures 1 and 2, the block or element B of this invention finds a basic shape in a cubical hollow plastic molding block with six square outer surfaces falling into three pairs of opposite surfaces whereof a first pair 1 each contains in the center a recess 11 with a narrow opening and wide bottom. A second pair 2 each provides with a reverse cone-shaped conductive projection 21 protruding outwardly from the center thereof, the free end of the projection 21 being larger than its inner end. A third pair 3 each is a plane surface.

Now with reference to Figures 3 and 4, one of the third pairs 3 is provided in its center with a cover 31 which is inserted into the guide grooves 32 to define a square cavity 4 thereunder. Disposed respectively in the bottom surface of each recess 11 and in the surface of each projection 21 are a pair of slots 12 for allowing insertion of a U-shaped metal contact plate 5 and a pair of slots 22 for allowing insertion of another U-shaped metal contact plate 6. The projecting prongs 51 and 61 of contact plates 5 and 6 pass through slots 12 and 22 into the side walls of said cavity 4 wherein an electronic component E is contained. The two poles 7 of the component E may be inserted through the holes 52, 62 in said prongs 51, 61 within said cavity 4 if necessary. Said prongs 51, 61 are bent to abut against the inner side wall of said cavity 4 so as to fix said contact plates 5, 6 on the one hand and hold the component E in place to insure the connection therebetween, on the other.

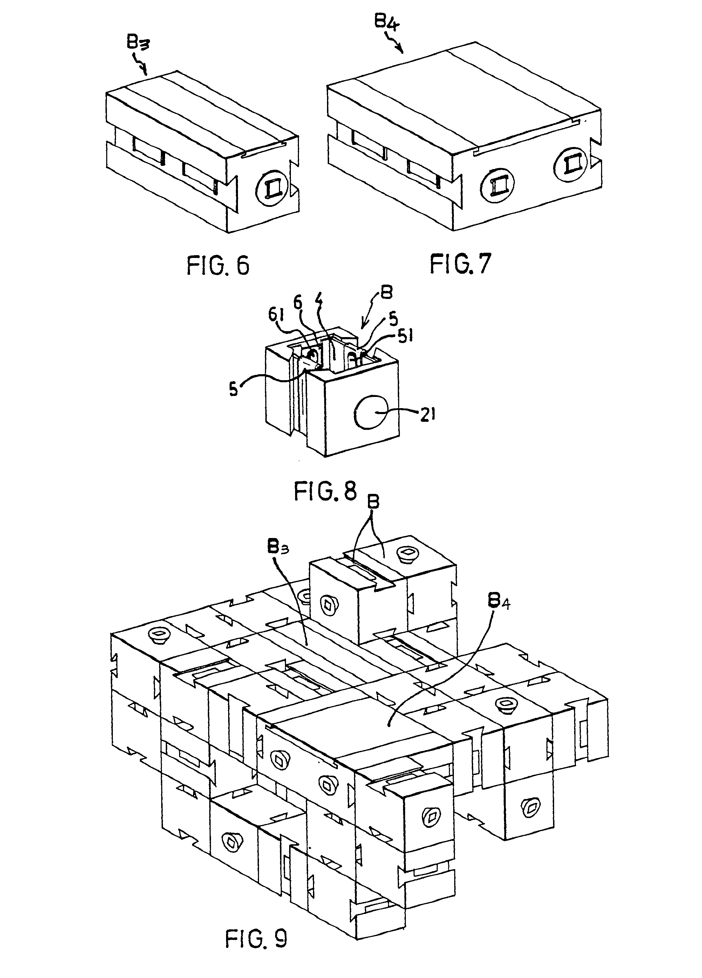

Now with reference to Figure 5, the recess 11 in the block $B_1$ is capable of receiving from either end the projection 21, embedded in another block $B_2$. When the projection 21 is moved relative to said recess 11 to reach at a predetermined position, i.e. the center of the recess 11 or when said blocks $B_1$, $B_2$ are aligned with each other, the contact plate 6, in the top surface of said projection 21, is tightly pressed against the contact plate 5 in the bottom surface of said recess 11 so that a circuit is connected. Shaped like a reverse cone, the projection 21 in this embodiment will not fall off once engaged within the recess 11, while two blocks $B_1$, $B_2$ so connected are rotatable with respect to the projection 21 in a direction D or D' about the longitudinal axis A of the latter, thereby allowing multidirectional adjustments of the position of block-engaging surfaces till a desired joint fits with a joint on the block to be combined. With a pair of recesses 11 and a pair of projections 21, or a total of four joints, each block is capable of substantially combining any other blocks.

The block B of the present invention is adapted to contain an electronic component E, the electrodes of which may be connected to said contact plates 5, 6 if necessary. The contact plates 5, 6 fixed to different side walls of said cavity 4 may be connected by wires so that a wide latitude is provided in the selection of joints when combining different blocks $B_1$, $B_2$, e.g. a recess 11 of a block $B_1$ may be engaged with a projection 21 of another block $B_2$, or vice versa as selected. A student can also assemble an electronic component in the cavity 4 of an empty block $B_1$ or $B_2$ by himself and mark the input and output ends of the electronic component E on the outer surface of the block to facilitate the selection of a proper joint when combining blocks.

As can be seen from Figures 6 and 7, a block may be twice or four times the size of the previously described basic cube-shaped block B so as to house bigger electronic components such as a battery or a transformer.

In another embodiment as depicted in Fig. 8, the fundamental configuration of the block $B_5$ is substantially the same as that of block B except that the methods of disposition of contact plates 5 and 6 are different. More specifically, said contact plate 5 extends the whole length of the recess 11 and the two prongs 51 provided thereon are bent to abut against the inner side wall of the cavity 4 so as to fix said contact plate 5 on the bottom of the recess 11; while said contact plate 6 is disposed in the other two inner side walls of said cavity 4 and is riveted by means of the conductible projection 21 to the central portion of said plate 6 instead of inserting said prongs 51, 61 of the contact plate into the slots 12, 22 provided at the recess 11 and outer end of said projection 21 as aforementioned.

When practicing with electronic circuits, student may pick out required elements and combine them one by one following the instructions given in a circuit diagram so that a complete circuit is soon built and yet produces sound and optical effects. The combined blocks as shown in Figure 9 appear aggregative and solid without taking up much space and can be taken apart for rearrangement conveniently. Apart from convenience, economy is found in building different circuits, for a flexible use of an adequate number of existing electronic components and blocks dispenses with unnecessary purchases of new sets of electronic components. Moreover, the element of this invention may serve as an intellectualizing toy because it combines instruction with amusement by providing a lot of fun in arranging for combination of blocks with multidirectionally adjustable joints. Thus it is of practical value.

**Claims**

1. A circuit kit comprising a plurality of interconnectible circuit elements, each element comprising a hollow cube (B) formed of plastic and defining six sides which comprise three pairs of mutually opposite sides, a first of said pairs of sides (1) each having a recess (11) with a narrow opening and a wide bottom and being open-ended, a second of said pairs of sides (2) each having a conductive projection (21) of reverse cone-shape extending outwardly from the center of said second pair of sides such that an outer end of said projection is of larger diameter than an inner end thereof, a third of said pairs of sides (3) each having a removable cover (31) providing access to the interior (4) of said element, a first metal contact plate (5) disposed along said bottom of each of said recesses and including prong means extending into the interior of said element, a second metal contact plate (6) engaged with said projection and electrical component means (E) disposed within the interior of said element and electrically connected to said first and second metal plates, said projections being sized for slidable endwise insertion into said open-ended recesses of another said element to make electrical contact between said first and second metal plates of said recess and said projection, said reverse cone-shaped projection and said recess being relatively rotatable about the longitudinal axis (A) of said reverse cone-shaped projection to enable said elements to be mutually adjusted while in an interconnected condition.

2. A circuit kit according to claim 1, wherein said electrical component means include wires, said prong means are bent to grip said wires.

**Patentansprüche**

1. Schaltungsbausatz mit einer Vielzahl verbindungsfähiger Schaltungselemente, wobei jedes Element einen hohlen Kubus (B) umfaßt, der aus Kunststoff gebildet ist und sechs Seiten definiert, welche drei Paare einander gegenüberliegender Seiten umfassen, wobei ein erstes dieser Paare von Seiten (1) je über eine Nut (11) mit einer engen Öffnung und einem weiten Boden verfügt und offenendig ist, einem zweiten dieser Paare von Seiten (2), von denen jedes einen leitenden Vorsprung (21) umgekehrt kegeliger Gestalt aufweist und von der Mitte dieses zweiten Paares von Seiten derart nach außen sich erstreckt, daß ein äußeres Ende dieses Vorsprungs von größerem Durchmesser als ein inneres Ende hiervon ist, einem dritten Paar dieser Seiten (3), die je einen entfernbaren Deckel (31) haben, der Zugang zum Inneren (4) dieses Elementes bietet, einer ersten Metallkontaktplatte (5), die längs des Bodens jeder dieser Nuten angeordnet ist und Pratzenausbildungen umfaßt, die in das Innere dieses Elementes sich erstrecken, einer zweiten Metallkontaktplatte (6), die ein Eingriff mit dem Vorsprung und den elektrischen Komponenten (E) steht, die im Inneren dieses Elementes angeordnet sind und elektrisch mit diesen ersten und zweiten Metallplatten verbunden sind, wobei diese Vorsprünge für ein stirnseitig gleitendes Einführen in diese offenendigen Nuten eines solchen anderen Elementes ausgebildet sind, um einen elektrischen Kontakt zwischen den ersten und zweiten Metallplatten dieser Nut und diesem Vorsprung herzustellen, wobei der umgekehrt kegelförmige Vorsprung sowie diese Nut relativ um diese Längsachse (A) dieses umgekehrt kegeligen Vorsprungs drehbar ist, derart, daß diese Elemente gegeneinander, während sie sich im miteinander verbundenen Zustand befinden, verstellbar sind.

2. Schaltungsbausatz nach Anspruch 1, dadurch gekennzeichnet, daß diese elektrischen Komponeten Drähte einschließen und diese Pratzenausbildungen zum Erfassen dieser Drähte umgebogen sind.

**Revendications**

1. Un ensemble prêt à monter pour constituer un circuit, comprenant une multiplicité d'éléments de circuits adaptés à être interconnectés, chaque élément comprenant un cube creux (B) en matière plastique et ayant six faces lesquelles comprennent trois paires de faces opposées l'une à l'autre, les faces d'une première paire desdites paires de faces étant munies d'un logement (11) ayant une ouverture étroite et un fond large et qui est ouvert en bout, les faces d'une seconde paire desdites paires de faces ayant chacune une saillie conductrice (21) en forme de cone inversé s'étendant vers l'extérieur depuis le centre desdites faces de la seconde paire de telle sorte qu'une extrémité plus extérieure de ladite saillie soit de plus grand diamètre qu'une extrémité plus intérieure de celle-ci, les faces d'une troisième paire desdites paires de faces (3) ayant chacune un couvercle amovible (31) donnant accès à l'intérieur (4) dudit élément, une première plaque de contact métallique (5) disposée le long dudit fond de chaque logement et comportant des moyens formant broche s'étendant à l'intérieur dudit élément, une seconde plaque de contact métallique (6) accrochée à ladite saillie, et des moyens composants électriques (E) disposés à l'intérieur dudit élément et reliés électriquement aux dites première et seconde plaques, lesdites saillies étant dimensionnées pour pouvoir être insérées par l'extrémité et en coulissant dans lesdits logements ouverts en bout d'un autre desdits éléments pour faire contact électriquement entre lesdites première et seconde plaques métalliques dudit logement et de ladite saillie, ladite saillie en forme de cône inversé et ledit logement étant pivotables l'un par rapport à l'autre autour de l'axe longitudinal (A) de ladite saillie en forme de cône inversé pour permettre auxdits éléments d'être ajustés l'un par rapport à l'autre en étant dans leur état interconnecté.

2. Un ensemble prêt à monter pour constituer un circuit, selon la revendication 1, dans lequel lesdits moyens composants électriques comportent des fils métalliques, lesdits moyens formant broche étant coudés pour serrer lesdits fils métalliques.

FIG. 1

FIG. 2

FIG. 3

FIG. 4

FIG. 5

FIG. 6

FIG. 7

FIG. 8

FIG. 9